# EUROPEAN PATENT SPECIFICATION

(11) **EP 3 607 005 B1**
(45) Date of publication and mention of the grant of the patent: **14.04.2021**
(21) Application number: 18713952.2
(22) Date of filing: 29.03.2018
(51) Int. Cl.: C09C 3/12, C09C 1/36, C09C 1/02, C09C 1/04, C09C 1/06, C08K 9/08

(54) **PIGMENT TREATED WITH AT LEAST ONE NON-REACTIVE POLYSILOXANE FOR USE IN THERMOPLASTICS**
PIGMENTE DIE MIT MINDESTENS EINEM POLYSILOXAN BEHANDELT WURDEN ZUR VERWENDUNG IN THERMOPLASTEN
PIGMENTS TRAITÉS AVEC AU MOINS UN POLYSILOXANE POUR UTILISATION DANS DES THERMOPLASTIQUES

(30) Priority: 05.04.2017 EP 17165087
(43) Date of publication of application: 12.02.2020
(73) Proprietor: Venator Uerdingen GmbH, 47829 Krefeld (DE)
(72) Inventor: AUER, Gerhard, 47800 Krefeld (DE); GÜNNEL, Horst, 47906 Kempen (DE); PROFT, Bernd, 47506 Neukirchen-Vluyn (DE)
(74) Representative: Nobbe, Matthias
(86) International application number: PCT/EP2018/058127
(87) International publication number: WO 2018/184991

(56) References cited:
- EP-A1- 1 204 006
- EP-A1- 1 281 735
- EP-A2- 1 333 053
- WO-A1-02/055596
- WO-A2-2007/011980
- WO-A2-2015/135536
- TADAO KATAOKA, SHIGEYUKI UEDA: "Viscosity-Molecular Weight Relationship For Polydimethylsiloxane", POLYMER LETTERS, vol. 4, no. 5, May 1966 (1966-05), pages 317-322, XP002774761, DOI: 10.1002/pol.1966.110040503

## Description

The present invention relates to inorganic pigments treated/coated with at least one non-reactive polysiloxane, methods for producing these coated inorganic pigments, thermoplastics comprising these coated inorganic pigments and methods for the production of these thermoplastics.

Plastics can be divided into the main groups of thermoplastics and thermosets. Polymers that have a flow transition range above the working temperature are known as thermoplastics. Thermoplastics are linear or branched polymers which in principle are flowable above the glass transition temperature (Tg) in the case of amorphous thermoplastics and above the melting point (Tm) in the case of (partly) crystalline thermoplastics. The chain movability is so large that the polymer molecules slide easily over one another and the material reaches the molten state (flow range, polymer melt).

The properties of plastics can be controlled by the use of additives. One group of additives encompasses pigments, e.g. inorganic pigments that are responsible for the coloring. For improved compatibility, inorganic pigments are usually surface-modified. Hence, they are coated to improve the stability of plastic articles or compounds with regard to polymer degradation. The polymer degradation can be e.g. recognized as yellow color of the plastic articles or compounds after applying thermal stress during the extrusion/molding process or thermal stress during the lifetime of the plastic article.

Inorganic pigments can be surface-modified by inorganic coatings. Silicon dioxide and aluminium oxide are commonly used as an inorganic coating of a titanium dioxide pigment, for example.

However, inorganic pigments with or without an inorganic coating can still adversely affect plastics, as these pigments often exhibit active sites on their surfaces. In the state of art, it is disclosed to use organic coatings, e.g. antioxidants or octyltriethoxysilanes for inorganic pigments to improve the stability of the plastic materials.

Inorganic pigments are furthermore hygroscopic and thus contain water strongly bound to the surface with its active sites. The high residual moisture content also negatively influences the plastic properties and is regarded to be at least partly responsible for discoloration of the plastic.

Disadvantages of the inorganic pigments having organic coatings according to the state of art are that the organic additives used for coating react with the water traces bound to the pigment surface under condensation of reaction products like hydrogen. Other additives lead e.g. to the formation of alcohol after subsequent thermal treatment. A further disadvantage is that the organic substances used for coating regularly do not meet requirements for materials intended to be in contact with food.

Inorganic pigments can also be surface-modified by organic coatings. For example, EP1281735A1 discloses a hydrophobic silica with a high whiteness obtained by mixing the silica and the dimethylpolysiloxane (viscosity of 59 mm²/s, trimethylsily terminated) and thereby coating said silica. The powder is then conditioned at 100 °C for one hour, followed by a heat treatment at 330-360 °C for one hour. The hydrophobic silica has a residual water content of 0.6 wt-%.

EP1204006A1 discloses a hydrophobized silica having a particle diameter of 40 nm coated with a polydimethyl siloxane having a viscosity of 350 mm²×s⁻¹. The silica is added to a solution of the polydimethylsiloxane in toluene under agitation and irradiating the solution by ultrasonic waves. The solution is then decompressed to 10 mm Hg in order to evaporate the toluene followed by drying at 50 °C at reduced pressure until the weight of the residue did not change. The silicone coated product is then heat treated at 200 °C for 2 hours in an electric furnace under nitrogen and the agglomerated powder followed by disaggregation of the obtained powder.

EP1333053A2 discloses a silica coated in a mass ratio of 1:1 with silicone oil (polydimethylsiloxane, 50 mm²×s⁻¹, e.g., DOW CORNING (R) 200 FLUID 50 CS carbon content approximately 33%) in a Gericke mixer. The resulting powder was conditioned for at least one hour at a temperature of 105 °C. This produced a material in which, although it was wettable by water, the silica and silicone oil could no longer be separated from one another with water. Mixing of this masterbatch in water produced stable suspension in which the silicone oil could no longer be separated from the silica. The suspension was dried using a spray drier. The dimethylsiloxane-treated silica is conditioned by aging at room temperature for at least 48 hours until it had attained a methanol wettability of at least 20%. The conditioned precipitated silica was heat-treated under oxidizing conditions in a muffle furnace with a bed height of about 1 to 2 cm at a temperature above 330-360 °C. for 1 hour in order to obtain a hydrophobic silica with a moisture (water) content of 0.6 wt.-%.

WO02/055596A1 discloses a method for treating a mineral filler consisting of a filler selected from the group consisting of marble, calcite, precipitated calcium carbonate, barium sulfate and mixtures thereof to provide a filler with hydrophobic properties suitable for incorporation into a polymer for a breathable film, comprising a two-step surface treatment of the filler, wherein the first step (pretreatment) comprising treating the filler with at least one polydialkylsiloxane, and the second step comprises treating the polydialkylsiloxane treated filler with at least one fatty acid having more than 10 carbon atoms, and the two steps can be carried out simultaneously. The polydialkylsiloxane is a polydialkylsiloxane of general formula (R)₃-Si-O-[(R)₂-Si-O]ₙ-Si-(R)₃ and the alkyl group R is a C₁-C₄ alkyl group having a kinematic viscosity at 25 °C of between 50 and 100,000 mm²×s⁻¹. In an example marble is treated with a polydimethylsiloxane having a viscosity of 1000 mm²×s⁻¹.

WO2007/011980A2 discloses a treated powder having improved loose bulk density comprising a silanized inorganic powder treated with a long chain fatty acid or salt thereof, wherein the amount of the long chain fatty acid is about 0.25% to about 2 wt.-%, based on the total weight of the treated powder, and wherein the loose bulk density of the treated powder is greater than the loose bulk density of an untreated silanized inorganic powder. The treated powder comprises at least one silane, or a mixture of at least one silane and at least one polydimethylsiloxane. The inorganic powder is selected from ZnS, titania, calcium carbonate, barium sulfate, zinc oxide, molybdenum sulfide talc and clay.

Furthermore, Kataoka et al. (Viscosity-Molecular Weight Relationship for Polydimethylsiloxane, Polymer Letters, vol. 4, no. 5, May 1966 (1966-05), pages 317-322, DOI:10-1002/pol.1966.110040503) reported a polydimethylsiloxane having a molecular weight of about 1.03×10⁴ and a viscosity of 270 cSt (270 mm²s⁻¹), a molecular weight of about 2.2×10⁴ having a viscosity of about 930 cSt (930 mm²s⁻¹) or with a molecular weight of about 3.34×10⁴ and a viscosity of 2700 cSt (2700 mm²s⁻¹) at 25 °C.

It is an object of the present invention therefore to provide an inorganic pigment that improves the stability of plastic articles or compounds with regard to polymer degradation, that avoids or reduces the formation of reaction products like hydrogen or alcohols during production, storage or application and that allows storage stability also under humid conditions and thus does not have the disadvantages of the known inorganic pigments.

It has now been found that the above-mentioned disadvantages can be dealt with when inorganic pigments are used that are treated with at least one non-reactive polysiloxane of the general Formula I, 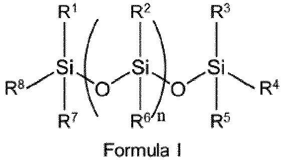
wherein R¹ to R⁸ may be the same or different and are selected from the group consisting of
   CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃,
   C₆H₅,
   (EO)ₓ, (PO)_{y} and copolymers thereof, wherein EO represents an oxyethylene unit, PO represents an oxypropylene unit and x and y may be the same or different and x + y is in the range of 1 to 50, and
   wherein the at least one non-reactive polysiloxane is having a viscosity in the range of 50-3000 mm² x s⁻¹ at 25°C, preferably 100-2000 mm² x s⁻¹ at 25°C, more preferably 150-1000 mm² x s⁻¹ at 25°C (determined according to DIN 51562), and
wherein the inorganic pigment coated with at least one non-reactive polysiloxane of the general Formula I has a residual moisture content of less than 1.0 wt-%, preferably less than 0.5 wt-%, more preferably less than 0.4 wt-%, determined by drying at 160°C to weight constancy,
wherein the at least one polysiloxane is present in an amount between 0.1 and 10 wt-%, preferably between 1 and 8 wt-%, more preferably between 3 and 6 wt-% of the coated inorganic pigment, calculated on the total weight of the coated pigment after drying at 160 °C to weight constancy.

The inorganic pigments according to the present invention provide a surface, on which the active sites are mostly covered by the at least one non-reactive polysiloxane accompanied by a low residual moisture content. Due to the treating or coating, the inorganic pigments show reduced hygroscopic properties, which seem to be responsible for an improved storage stability, and the treatment leads to an improved stability of plastic articles containing these coated pigments. The low residual moisture content and the coverage of the active sites seem to be responsible for reduced polymer degradation, which is measured as yellow color of the plastics due to thermal stress during the extrusion/molding process or during the lifetime of the plastic article containing the inorganic pigment. Other impacts on the properties of the plastics, which are impaired by polymer degradation like mechanical strength, will also be reduced.

The inorganic pigment can be coated either with one kind of non-reactive polysiloxanes or with a mixture of different kinds of non-reactive polysiloxanes of the general Formula I as shown above.

Preferably, R¹ to R⁸, in the at least one non-reactive polysiloxane of the general Formula I, may be the same or different and are selected from the group consisting of CₘH₂ₘ₊₁, wherein m is <6, more preferably <4, and even more preferably m = 1 or 2. Even more preferably, the at least one non-reactive polysiloxane is polydimethylsiloxane, most preferably a FDA-approved polydimethylsiloxane, e.g. M350, which is a polydimethylsiloxane having a viscosity of 350 mm² x s⁻¹ at 25°C. These polydimethylsiloxanes meet the regulations for materials intended to have contact with foods which are thus in line with EU No 10/2011.

The at least one polysiloxanes is present in an amount between 0.1 and 10 wt-%, preferably between 1 and 8 wt-%, more preferably between 3 and 6 wt-% of the coated inorganic pigment, calculated on the total weight of the coated pigment according to carbon analysis after drying at 160°C to weight constancy. It has been found that the degradation properties of the coated inorganic pigment according to the present invention rapidly decreases with an increasing amount of the at least one non-reactive polysiloxane. However, amounts of the at least one non-reactive polysiloxane of more than 3 % per weight only slightly decreases the degradation properties further.

The inorganic pigment according to the present invention can be any inorganic pigment, however, the inorganic pigment is preferably selected from the group consisting of titanium dioxide, barium sulfate, zinc oxide and lithopone or mixtures thereof, more preferably the inorganic pigment is titanium dioxide, most preferably rutile.

The inorganic pigment according to the present invention can be organically or inorganically surface-modified with further compounds before treating with the at least one non-reactive polysiloxane of the general Formula I. According to the present invention, the inorganic pigment can also be pretreated with a reactive siloxane like MH-15 having reactive Si-H moieties or other reactive polysiloxanes having Si-OR moieties in order to additionally silanize the surface of the pigment particles.

In one exemplary embodiment, the inorganic pigment is a titanium dioxide pigment being treated with hydrated inorganic precursors of silicon dioxide and/or aluminium oxide and then treated with at least one non-reactive polysiloxane of the general Formula I.

In one embodiment, the coated pigment comprises reactive groups selected from -Si-H, or -Si-OR in an amount of less than 0.1 wt.-%, preferably less than 0.01 wt.-% calculated on the total weight of the coated pigment and the added amount of organic additive after drying at 160°C to weight constancy. Thus, almost no reaction products like hydrogen or alcohols during production, storage or application are formed.

Accordingly, the present invention also provides a method for producing a coated inorganic pigment according to the present invention comprising the step of treating an inorganic pigment with at least one non-reactive polysiloxane of the general Formula I or mixtures thereof, 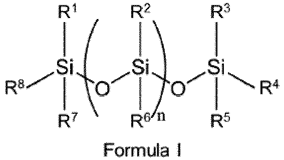 wherein R¹ to R⁸ may be the same or different and are selected from the group consisting of
CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃,
C₆H₅,
(EO)ₓ, (PO)_{y} and copolymers thereof, wherein EO represents an oxyethylene unit, PO represents an oxypropylene unit and x and y may be the same or different and x + y is in the range of 1 to 50, and
wherein the at least one non-reactive polysiloxane is having a viscosity in the range of 50-3000 mm² x s⁻¹ at 25°C, preferably 100-2000 mm² x s⁻¹ at 25°C, more preferably 150-1000 mm² x s⁻¹ at 25°C (in line with DIN 51562).

The treating step is preferably carried out at a temperature in the range of 100°C to 450°C, more preferably at a temperature in the range of 250°C to 400 °C. Due to the elevated temperature, the water is driven out of the inorganic pigment and the surface of the inorganic pigment with its active sites is covered by the at least one non-reactive polysiloxane.

The treating step can also be carried out as a two-step or multi-step process in which the at least one non-reactive polysiloxane of the general Formula I is added to the pigment in several steps which stages might be interrupted each by a milling or kneading step.

By the method according to the invention, it is possible to produce coated inorganic pigments preferably selected from the group consisting of titanium dioxide, barium sulfate, zinc oxide and lithopone, preferably titanium dioxide, more preferably rutile, or mixtures thereof.

In one embodiment, the inorganic pigment is used in a pre-dried form having a residual moisture content of less than 1 wt-%, preferably less than 0.5 wt-%, more preferably less than 0.4 wt-%, determined by drying at 160°C to weight constancy. In case of a pre-dried inorganic pigment, an elevated temperature during the treating of the inorganic pigment with at least one non-reactive polysiloxane of the general Formula I is not mandatory. Thus, according to the present invention, it is possible to treat the inorganic pigment thermally until a residual moisture content of less than 1.0 wt-%, preferably less than 0.5 wt-%, more preferably less than 0.4 wt-%, determined by drying at 160°C to weight constancy, is achieved, followed by treating the obtained inorganic pigment with the at least one non-reactive polysiloxane of the general Formula I. However, due to the hygroscopic properties of the inorganic pigment itself, it has to be ensured that, in the period between the thermal treatment and the treating of the inorganic pigment with at least one non-reactive polysiloxane of the general Formula I, the moisture content does not increase over the limit as required.

Consequently, in case the step of treating an inorganic pigment with at least one non-reactive polysiloxane of the general Formula I is carried out at elevated temperatures, it is possible to use an inorganic pigment as starting material that has a higher moisture content. The elevated temperatures lead to evaporation of the water, which is directly replaced by the at least on non-reactive polysiloxane.

According to the invention, the step of treating the inorganic pigment with said at least one non-reactive polysiloxane of the general Formula I is carried out for less than 12 h, preferably less than 6 h, more preferably less than 4h, most preferably between 0.25 to 2 h.

The thermal treatment can also be applied by microwave heating. By using microwaves, the drying-time can significantly be reduced to a few minutes, but may lead to a deterioration of the color value b. Therefore, applying microwave heating should be carried out under conditions with controlled energy impact.

In a further embodiment, the treating comprises milling and/or kneading. In one embodiment, only a partial amount of the at least one non-reactive polysiloxane is added to the inorganic pigment before the milling step and/or kneading step, wherein the remaining amount of the at least one non-reactive polysiloxane is added during the further process. Such a partitioning of the at least one non-reactive polysiloxane is particularly preferred if a steam jet mill is used for milling and leads to increased yields of the coated inorganic pigment.

In a further embodiment of the invention, the inorganic pigment is crushed down to a size of less than 1 mm, preferably to a size of less than 0,8 mm, more preferably to less than 0,6 mm, before being treated with the at least one non-reactive polysiloxane.

According to the invention, the at least one non-reactive polysiloxane is used in an amount that a coated inorganic pigment comprising between 0.1 and 10 wt-%, preferably between 1 and 8 wt-%, more preferably between 3 and 6 wt-% of the at least one polysiloxane, referred to the total weight of the treated pigment after drying at 160°C to weight constancy and calculated in accordance with a carbon analysis, is obtained.

Preferably, the method of the present invention comprises the step of adding at least one additive having reactive groups selected from silane-(Si-H) or C₁-C₁₂-alkoxy-siloxanes. Such coated inorganic pigments provide an further improved thermal stability. The silane-(Si-H) can be added before, together or after the addition of the non-reactive polysiloxane.

The present invention further provides a thermoplastic comprising the inorganic pigment of the present invention.

Thermoplastics which can be used in the process of the invention include thermoplastically workable plastics having pronounced entropy-elastic properties. Thermoplastics also include all plastics consisting of linear or thermolabile crosslinked polymer molecules, for example polyolefins, vinyl polymers, polyesters, polyacetals, polycarbonates, also polyurethanes, ionomers, and thermoplastic elastomers such as acrylnitrile-butadiene-styrene (ABS), polyamide (PA), polylactate (PLA), polymethylmethacrylate (PMMA), polycarbonate (PC), polyethylene terephthalate (PET), polyethylene (PE), polypropylene (PP), polystyrene (PS), polyether etherketone (PEEK), polyvinylchloride (PVC), PBT polybutylene terephthalate as well as baking enamels for powder coating.

Preferably, the thermoplastic comprises polycarbonate.

The present invention further provides a method for the production of a thermoplastic comprising adding a pigment according to the present invention to a thermoplastic polymer, mixing the polymer mixture and subjecting the obtained polymer mixture to a plastics forming process, preferably an injection molding process, a compression molding process, a pressing process or an extrusion process.

Preferably, the polymer mixture is dried at a temperature in the range of 80°C to 200°C for 1-10 h before the plastics forming process.

In a preferred embodiment, the plastic production process is carried out at a temperature in the range of 200°C to 450°C, preferably in the range of 280°C to 370°C.

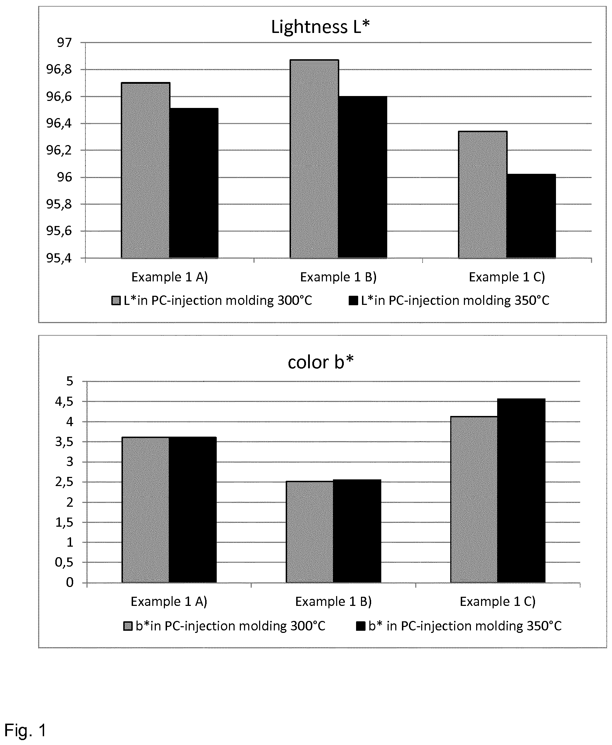

The attached Figures 1 to 4 illustrate the Lightness L* and Color b* values obtained for the samples as prepared in Examples 1 to 4, respectively.

### Experimental Part

### Measuring methods

The methods for determining properties of the coated pigments are as follows.

A mixture of 5% of the coated pigment in Makrolon 3108 powder is dried for 5 hours at 120°C. The dried mixture is processed on an Arburg 221 injection moulder at 300°C and 350°C, respectively giving white polycarbonate plates. The optical properties Lightness L* and color b* (according to the CIELab color system) of the moulded plates are determined with a Hunterlab UltraScan VIS spectrophotometer applying a light source D 65 using a 10° observer with gloss included.

The content of the organic coating on a pigment is determined by carbon analysis of the pigment using an ELTRA CS2000 analyzer and calculation of the total organic coating out of it according to the share of carbon in the organic applied.

For this purpose, the probe is combusted at 1100°C in an oxygen stream and the formed CO₂ is passed through in an infrared cell for detection.

The water content of the particles, especially after drying, can be calculated making use of the Karl-Fischer titration method.

The content of reactive groups such as -Si-H moieties is measured by alkaline hydrolysis and volumetric determination of the formed hydrogen gas.

The particle size of the particles is determined by sieving analysis.

All weight percentages refer to the total weight of the treated pigment after drying to weight constancy at 160°C. Such drying can be carried under air or protective atmosphere.

The invention is further illustrated by the following Examples 1 to 4 which are further illustrated in the attached Figures 1 to 4 referring to the respective Example of the same number.

### Example 1

A) Micronized rutile titanium dioxide pigment treated with alumina (RKB3) was dried at 130°C. The dry residue was crushed to particles having a diameter below 1 mm. These particles were sprayed with 0.5 wt-% M350 (20 g M350/4 kg dry residue) and heated for 1h at 350°C in a rotary kiln. Subsequently, the particles were treated in a steam jet mill (steam/product relation 3.0, 20 kg/h entry-, 40 kg/h mill-steam), whereby just a low dust formation was observed. The milled product (5.14 kg) was homogenized in a Lödige mixer, whereby further 200 g M350 (3.9%) was added. Approximately 5.3 kg of an inorganic pigment coated with a non-reactive polysiloxane and a residual moisture content of 0.6 % according to the present invention was obtained.
B) Micronized rutile titanium dioxide pigment treated with alumina (RKB3) was dried at 130°C. The dry residue was crushed to particles having a diameter below 1mm. These particles were sprayed with 0.5 wt-% M350 (20 g M350/4 kg dry residue). The particles were treated in a steam jet mill (steam/product relation 3.0, 20kg/h entry-, 40 kg/h mill-steam). The milled product (5.51 kg) was homogenized in a Lödigemischer, whereby further 200 g M350 (3.6%) was added. The product was heated for 1h at 350°C in a rotary kiln. Approximately 5.51 kg of an inorganic pigment coated with a non-reactive polysiloxane and a residual moisture content of 0.3 % according to the present invention was obtained as granulate having an particle diameter of approximately 1-2 mm.
C) Micronized rutile titanium dioxide pigment treated with alumina (RKB3) was dried at 130°C. The dry residue was crushed to particles having a diameter below 1mm. These particles were sprayed with 3 wt-% M350 (120 g M350/4 kg dry residue) and heated for 1h at 350°C in a rotary kiln. The product (8.02 kg) was milled in a steam jet mill (steam/product relation 3.0, 20 kg/h entry-, 40 kg/h mill-steam) Approximately 6.03 kg of an inorganic pigment coated with a non-reactive polysiloxane and a residual moisture content of 0.4 % according to the present invention was obtained.

The following processes include mixing of polycarbonate powder Macrolon 3108 (PC) and the obtained pigment powder (5 %) of Examples 1. A), B) and C), respectively, drying of the mixture at 120°C for 5h and subsequently subjecting the mixture an injection moulding process at 300 and 350°C. Optical properties of polycarbonate (PC) plates containing the pigments according to examples A)-C) were analyzed and shown in Figure 1.

### Example 2

Optical properties of polycarbonate (PC) plates containing pigments RFK3 with organic treatment M350 (Example 2 A) and octyltriethoxysilane (Example 2 B), respectively, and subsequent thermal treatment at 350°C (0.5h) before injection moulding were analyzed.

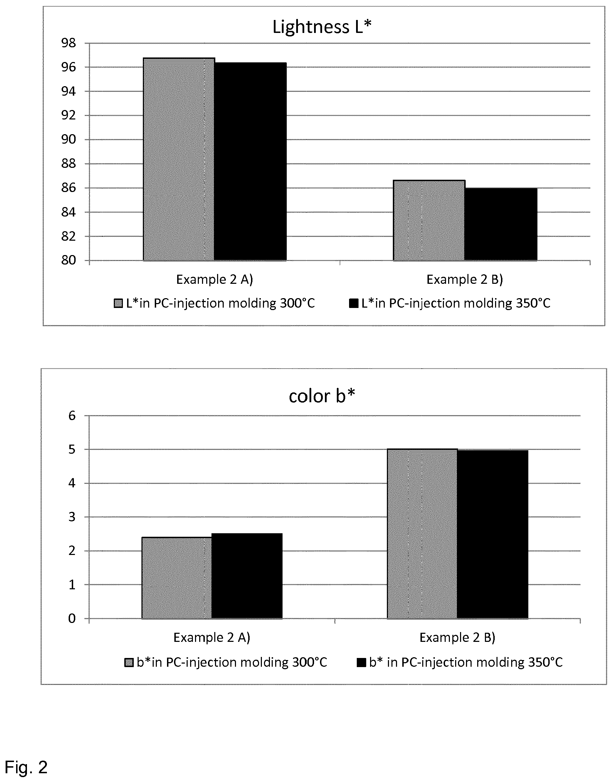

The following processes include the mixing of polycarbonate powder Macrolon 3108 (PC) and the pigment powder (5% referred to the weight of the ) containing M350 and octyltriethoxysilane, respectively, drying of the mixture at 120°C for 5h and subsequently subjecting the mixture an injection moulding process at 300 and 350°C. The resulting plates were analyzed regarding optical properties Lightness L* and colour b*. M350, compared to octyltriethoxysilane, leads to higher L* and lower b* values at test temperatures 300 and 350°C as and shown in Figure 2.

### Example 3

Optical properties of PC plates containing pigments RKB3 with increasing amount of organic treatment M350 with 0,0, 2,0, 3,0 and 4% (Examples 3 A) - 3 D), respectively, and subsequent thermal treatment at 350°C followed by an injection moulding process were analyzed.

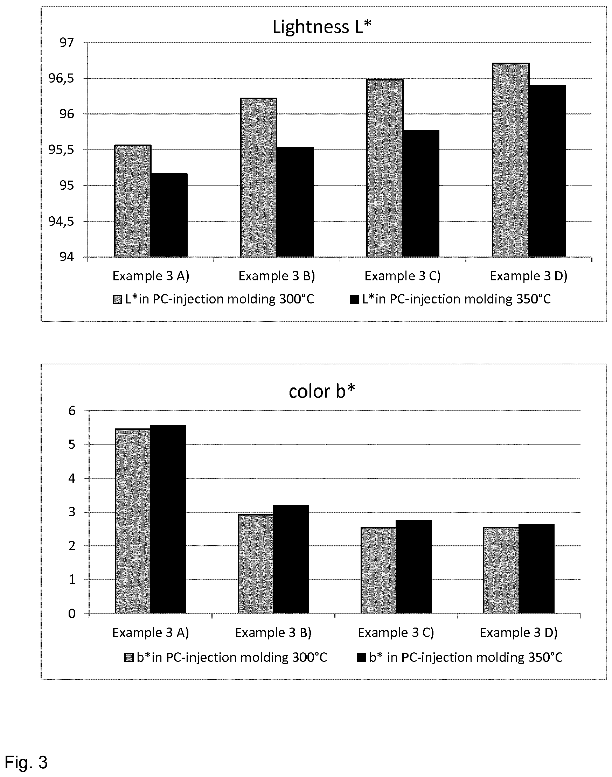

The injection moulding process includes mixing polycarbonate powder Macrolon 3108 (PC) and the pigment powder (5%), drying of the mixture at 120°C for 5h and subsequently subjecting the mixture an injection moulding process at 300 and 350°C, respectively. The resulting plates were analyzed regarding optical properties Lightness L* and colour b* and shown in Figure 3. An increasing amount of organic treatment increases L* and decreases colour b* at test temperatures 300 and 350°C, respectively.

### Example 4

Optical properties of PC plates containing pigments RKB3 with organic treatment M350 (3%, Example 4 A)) and subsequent thermal treatment at 350°C and microwave (1 min. 800W/50g, Example 4 B)), respectively, followed by an injection moulding process were analyzed.

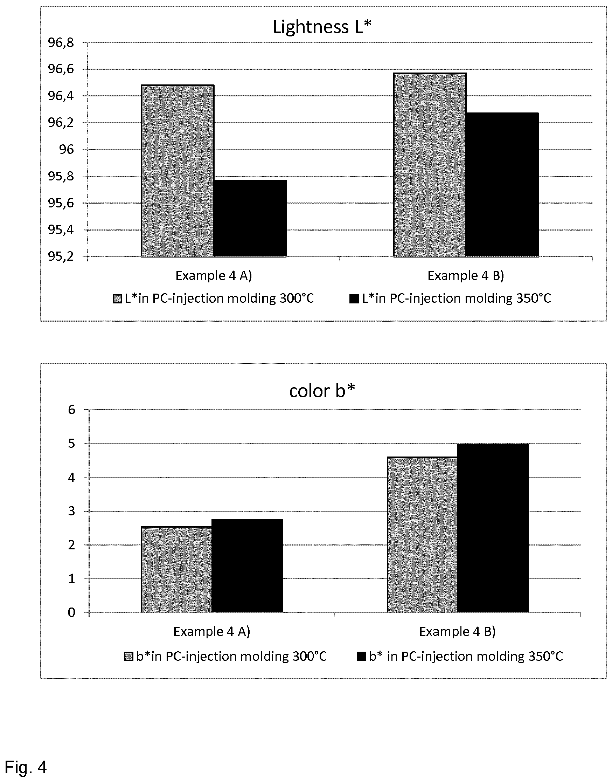

The injection moulding process includes mixing of polycarbonate powder Macrolon 3108 (PC) and the pigment powder (5%), drying of the mixture at 120°C for 5h and subsequently subjecting the mixture an injection moulding process at 300 and 350°C, respectively. The resulting plates were analyzed regarding optical properties Lightness L* and colour b* and shown in Figure 4. Microwave heating leads to higher L* and higher b* at test temperatures 300 and 350°C, compared to thermal treatment at 350°C.

## Claims

1. Inorganic pigment treated with at least one non-reactive polysiloxane of the general Formula I, 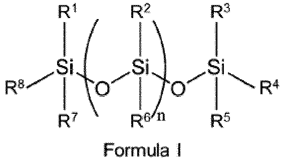
wherein R¹ to R⁸ may be the same or different and are selected from the group consisting of
CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine,
C₆H₅,
(EO)ₓ, (PO)_{y} and copolymers thereof, wherein EO represents an oxyethylene unit, PO represents an oxypropylene unit and x and y may be the same or different and x + y is in the range of 1 to 50, and
wherein the at least one non-reactive polysiloxane is having a viscosity in the range of 50-3000 mm² x s⁻¹ at 25°C, preferably 100-2000 mm² x s⁻¹ at 25°C, more preferably 150-1000 mm² x s⁻¹ at 25°C (DIN 51562), and
wherein the inorganic pigment coated with at least one non-reactive polysiloxane of the general Formula I has a residual moisture content of less than 1 wt-%, preferably less than 0.5 wt-%, more preferably less than 0.4 wt-%, after drying at 160°C to weight constancy,
wherein the at least one polysiloxane is present in an amount between 0.1 and 10 wt-%, preferably between 1 and 8 wt-%, more preferably between 3 and 6 wt-% of the coated inorganic pigment, calculated on the total weight of the coated pigment after drying at 160°C to weight constancy.

2. Inorganic pigment according to claim 1, wherein, in the at least one non-reactive polysiloxane of the general Formula I, R¹ to R⁸ may be the same or different and are selected from the group consisting of CₘH₂ₘ₊₁, wherein m is <6, more preferable <4, and even more preferable m = 1 or 2.

3. Inorganic pigment according to claim 1 or 2, wherein the at least one non-reactive polysiloxane is polydimethylsiloxane.

4. Inorganic pigment according to anyone of claims 1 to 3 wherein the inorganic pigment is selected from the group consisting of titanium dioxide, preferably rutile, barium sulfate, zinc oxide and lithopone or mixtures thereof.

5. Inorganic pigment according to anyone of claims 1 to 4, wherein the pigment comprises reactive groups selected from -Si-H, or -Si-OR in an amount of less than 0,1 wt.-%, preferably less than 0,01 wt.-% calculated on the total weight of the coated pigment after drying at 160°C to weight constancy.

6. Inorganic pigment according to anyone of claims 1 to 5 wherein the inorganic pigment is inorganically or organically pretreated.

7. Method for producing a coated inorganic pigment according to any of claims 1 to 6 comprising the step of treating an inorganic pigment with at least one non-reactive polysiloxane of the general Formula I, 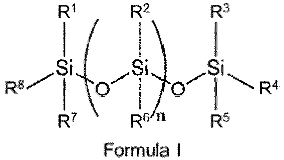
wherein R¹ to R⁸ may be the same or different and are selected from the group consisting of
CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine,
C₆H₅,
(EO)ₓ, (PO)_{y} and copolymers thereof, wherein EO represents an oxyethylene unit, PO represents an oxypropylene unit and x and y may be the same or different and x + y is in the range of 1 to 50, and
wherein the at least one non-reactive polysiloxane is having a viscosity in the range of 50-3000 mm² x s⁻¹ at 25°C, preferably 100-2000 mm² x s⁻¹ at 25°C, more preferably 150-1000 mm² x s⁻¹ at 25°C (DIN 51562),
preferably at a temperature in the range of 100°C to 450°C, more preferably at a temperature in the range of 250°C to 400 °C.

8. Method according to claim 7, wherein the step of thermally treating the inorganic pigment with said at least one non-reactive polysiloxane of the general Formula I is carried out for less than 12 h, preferably less than 6 h, more preferably less than 4h, most preferably between 0.25 to 2 h.

9. Method according to anyone of claims 7 or 8, wherein treating comprises milling and/or kneading.

10. Thermoplastic comprising an inorganic pigment according to anyone of claims 1 to 6.

11. Thermoplastic according to claim 10, wherein the thermoplastic comprises polycarbonate.

12. Method for the production of a thermoplastic comprising adding a pigment according to one of claims 1 to 6 to a thermoplastic polymer, mixing the obtained polymer-pigment combination and subjecting the obtained mixture to a plastics forming process, preferably an injection molding process, a compression molding process, a pressing process or an extrusion process.

13. Method according to claim 12, wherein the thermoplastic production process is carried out at a temperature in the range of 200°C to 450°C, preferably in the range of 280°C to 370°C.

## Patentansprüche

1. Anorganisches Pigment, das mit mindestens einem nicht-reaktiven Polysiloxan der allgemeinen Formula I behandelt wurde, 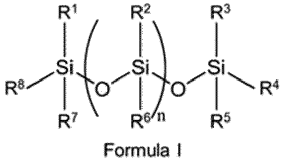
wobei R¹ bis R⁸ gleich oder verschieden sein können und ausgewählt sind aus der Gruppe bestehend aus
CₘH₂ₘ₊₁, wobei m ≤10, vorzugsweise <6, bevorzugt <4, und besonders bevorzugt m = 1, 2 oder 3 ist, und fluorierten Derivaten davon, wobei mindestens ein Wasserstoffatom durch Fluor ersetzt ist,
C₆H₅,
(EO)ₓ, (PO)_{y} und Copolymere davon, wobei EO eine Oxyethyleneinheit darstellt, PO eine Oxypropyleneinheit darstellt und x und y gleich oder verschieden sein können und x + y im Bereich von 1 bis 50 liegt, und
wobei das mindestens eine nicht-reaktive Polysiloxan eine Viskosität im Bereich von 50-3000 mm² x s⁻¹ bei 25°C, vorzugsweise 100-2000 mm² x s⁻¹ bei 25°C, besonders bevorzugt 150-1000 mm² x s⁻¹ bei 25°C (DIN 51562), aufweist und
wobei das mit mindestens einem nicht-reaktiven Polysiloxan der allgemeinen Formel I beschichtete anorganische Pigment einen Restfeuchtegehalt von weniger als 1 Gew.-%, vorzugsweise weniger als 0,5 Gew.-%, besonders bevorzugt weniger als 0,4 Gew.-%, nach Trocknung bei 160°C bis zur Gewichtskonstanz aufweist,
wobei das mindestens eine Polysiloxan in einer Menge zwischen 0,1 und 10 Gew.-%, vorzugsweise zwischen 1 und 8 Gew.-%, besonders bevorzugt zwischen 3 und 6 Gew.-% des beschichteten anorganischen Pigments, berechnet auf das Gesamtgewicht des beschichteten Pigments nach Trocknung bei 160°C bis zur Gewichtskonstanz, vorhanden ist.

2. Anorganisches Pigment nach Anspruch 1, **dadurch gekennzeichnet, dass** in dem mindestens einen nicht-reaktiven Polysiloxan der allgemeinen Formel I R¹ bis R⁸ gleich oder verschieden sein können und ausgewählt sind aus der Gruppe bestehend aus CₘH₂ₘ₊₁, wobei m <6, bevorzugt <4 und besonders bevorzugt m = 1 oder 2 ist.

3. Anorganisches Pigment nach Anspruch 1 oder 2, wobei das mindestens eine nicht-reaktive Polysiloxan Polydimethylsiloxan ist.

4. Anorganisches Pigment nach einem der Ansprüche 1 bis 3, wobei das anorganische Pigment ausgewählt ist aus der Gruppe bestehend aus Titandioxid, vorzugsweise Rutil, Bariumsulfat, Zinkoxid und Lithopon oder Mischungen davon.

5. Anorganisches Pigment nach einem der Ansprüche 1 bis 4, wobei das Pigment reaktive Gruppen, ausgewählt aus -Si-H oder -Si-OR, in einer Menge von weniger als 0,1 Gew.-%, vorzugsweise weniger als 0,01 Gew.-%, bezogen auf das Gesamtgewicht des beschichteten Pigments nach Trocknung bei 160°C bis zur Gewichtskonstanz, enthält.

6. Anorganisches Pigment nach einem der Ansprüche 1 bis 5, wobei das anorganische Pigment anorganisch oder organisch vorbehandelt ist.

7. Verfahren zur Herstellung eines beschichteten anorganischen Pigments nach einem der Ansprüche 1 bis 6, umfassend den Schritt der Behandlung eines anorganischen Pigments mit mindestens einem nicht-reaktiven Polysiloxan der allgemeinen Formula I, 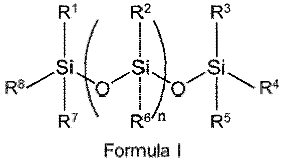
wobei R¹ bis R⁸ gleich oder verschieden sein können und ausgewählt sind aus der Gruppe bestehend aus
CₘH₂ₘ₊₁, worin m ≤10, vorzugsweise <6, bevorzugter <4 und noch bevorzugter m = 1, 2 oder 3 ist, und fluorierten Derivaten davon, worin mindestens ein Wasserstoffatom durch Fluor ersetzt ist,
C₆H₅,
(EO)ₓ, (PO)_{y} und Copolymere davon, wobei EO eine Oxyethyleneinheit darstellt, PO eine Oxypropyleneinheit darstellt und x und y gleich oder verschieden sein können und x + y im Bereich von 1 bis 50 liegt, und
wobei das mindestens eine nicht-reaktive Polysiloxan eine Viskosität im Bereich von 50-3000 mm² x s⁻¹ bei 25°C, vorzugsweise 100-2000 mm² x s⁻¹ bei 25°C, besonders bevorzugt 150-1000 mm² x s⁻¹ bei 25°C (DIN 51562) aufweist,
vorzugsweise bei einer Temperatur im Bereich von 100°C bis 450°C, besonders bevorzugt bei einer Temperatur im Bereich von 250°C bis 400°C.

8. Verfahren nach Anspruch 7, wobei der Schritt der thermischen Behandlung des anorganischen Pigments mit dem mindestens einen nicht-reaktiven Polysiloxan der allgemeinen Formel I für weniger als 12 h, vorzugsweise weniger als 6 h, noch bevorzugter weniger als 4 h, besonders bevorzugt zwischen 0,25 bis 2 h durchgeführt wird.

9. Verfahren nach einem der Ansprüche 7 oder 8, wobei die Behandlung das Mahlen und/oder Kneten umfasst.

10. Thermoplast, enthaltend ein anorganisches Pigment nach einem der Ansprüche 1 bis 6.

11. Thermoplast nach Anspruch 10, wobei der Thermoplast Polycarbonat umfasst.

12. Verfahren zur Herstellung eines Thermoplasten, umfassend die Zugabe eines Pigments nach einem der Ansprüche 1 bis 6 zu einem thermoplastischen Polymer, das Mischen der erhaltenen Polymer-Pigment-Kombination und das Unterziehen des erhaltenen Gemischs einem Kunststoff-Formgebungsverfahren, vorzugsweise einem Spritzgussverfahren, einem Formpressverfahren, einem Pressverfahren oder einem Extrusionsverfahren.

13. Verfahren nach Anspruch 12, wobei das thermoplastische Herstellungsverfahren bei einer Temperatur im Bereich von 200°C bis 450°C, vorzugsweise im Bereich von 280°C bis 370°C, durchgeführt wird.

## Revendications

1. Pigment inorganique traité avec au moins un polysiloxane non réactif de formule générale I, 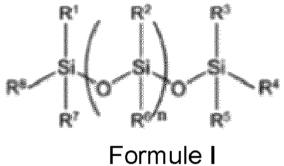
dans laquelle R¹ à R⁸ peuvent être identiques ou différents et sont choisis dans le groupe constitué par
CₘH₂ₘ₊₁, m étant ≤ 10, de préférence < 6, davantage de préférence < 4, et encore davantage de préférence m = 1, 2 ou 3, et leurs dérivés fluorés au moins un atome d'hydrogène étant remplacé par un fluor,
C₆H₅,
(EO)ₓ, (PO)_{y} et leurs copolymères, EO représentant une unité oxyéthylène, PO représentant une unité oxypropylène et x et y pouvant être identiques ou différents et x + y se situe dans la plage de 1 à 50, et
l'au moins un polysiloxane non réactif ayant une viscosité dans la plage de 50 à 3000 mm² x s⁻¹ à 25 °C, de préférence de 100 à 2000 mm² x s⁻¹ à 25 °C, davantage de préférence de 150 à 1000 mm² x s⁻¹ à 25 °C (DIN 51562), et
le pigment organique revêtu avec au moins un polysiloxane non réactif de formule générale I ayant une teneur en humidité résiduelle de moins de 1 % en poids, de préférence de moins de 0,5 % en poids, davantage de préférence de moins de 0,4 % en poids, après séchage à 160 °C pour la constance du poids,
l'au moins un polysiloxane étant présent en une quantité comprise entre 0,1 et 10 % en poids, de préférence entre 1 et 8 % en poids, davantage de préférence entre 3 et 6 % en poids du pigment inorganique revêtu, calculé sur le poids total du pigment revêtu après séchage à 160 °C pour la constance du poids.

2. Pigment inorganique selon la revendication 1, dans lequel, dans l'au moins un polysiloxane non réactif de formule générale I, R¹ à R⁸ peuvent être identiques ou différents et sont choisis dans le groupe constitué par CₘH₂ₘ₊₁, m étant < 6, davantage de préférence < 4 et encore davantage de préférence m = 1 ou 2.

3. Pigment inorganique selon la revendication 1 ou 2, dans lequel l'au moins un polysiloxane non réactif est le polydiméthylsiloxane.

4. Pigment inorganique selon l'une quelconque des revendications 1 à 3 dans lequel le pigment inorganique est choisi dans le groupe constitué par le dioxyde de titane, de préférence le rutile, le sulfate de baryum, l'oxyde de zinc et la lithophone ou leurs mélanges.

5. Pigment inorganique selon l'une quelconque des revendications 1 à 4, dans lequel le pigment comprend des groupes réactifs choisis parmi -Si-H, ou - Si-OR en une quantité de moins de 0,1 % en poids, de préférence de moins de 0,01 % en poids, calculée sur le poids total du pigment revêtu après séchage à 160 °C pour la constance du poids.

6. Pigment inorganique selon l'une quelconque des revendications 1 à 5 dans lequel le pigment inorganique est inorganiquement ou organiquement prétraité.

7. Procédé de production d'un pigment inorganique revêtu selon l'une quelconque des revendications 1 à 6 comprenant l'étape de traitement d'un pigment inorganique avec au moins un polysiloxane de formule générale I, 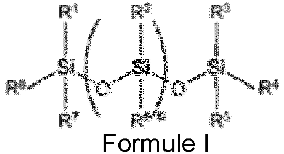
dans laquelle R¹ à R⁸ peuvent être identiques ou différents et sont choisis dans le groupe constitué par
CₘH₂ₘ₊₁, m étant ≤ 10, de préférence < 6, davantage de préférence < 4, et encore davantage de préférence m = 1, 2 ou 3, et leurs dérivés fluorés au moins un atome d'hydrogène étant remplacé par un fluor,
C₆H₅,
(EO)ₓ et (PO)_{y}, et leurs copolymères, EO représentant une unité oxyéthylène, PO représentant une unité oxypropylène et x et y pouvant être identiques ou différents et x + y se situant dans la plage de 1 à 50, et
l'au moins un polysioxane non réactif ayant une viscosité dans la plage de 50 à 3000 mm² x s⁻¹ à 25 °C , de préférence 100 à 2000 mm² x s⁻¹ à 25 °C, davantage de préférence de 150 à 1000 mm² x s⁻¹ à 25 °C (DIN 51562),
de préférence à une température dans la plage de 100 à 450 °C, davantage de préférence à une température dans la plage de 250 à 400 °C.

8. Procédé selon la revendication 7, dans lequel l'étape de traitement thermique du pigment inorganique avec le dit au moins un polysiloxane non réactif de formule générale I est réalisé durant moins de 12 heures, de préférence moins de 6 heures, davantage de préférence moins de 4 heures, de préférence entre toutes entre 0,25 et 2 heures.

9. Procédé selon l'une quelconque des revendications 7 ou 8, dans lequel le traitement comprend un broyage et/ou un pétrissage.

10. Thermoplastique comprenant un pigment inorganique selon l'une quelconque des revendications 1 à 6.

11. Thermoplastique selon la revendication 10, dans lequel le thermoplastique comprend du polycarbonate.

12. Procédé de production d'un thermoplastique comprenant l'addition d'un pigment selon l'une des revendications 1 à 6 à un polymère thermoplastique, le mélange de la combinaison polymère-pigment et la soumission du mélange obtenu à un processus de formation de plastiques, de préférence un processus de moulage par injection, un processus de moulage par compression, un processus de pressage ou un processus d'extrusion.

13. Procédé selon la revendication 12, dans lequel le procédé de production de thermoplastique est réalisé à une température dans la plage de 200 à 450 °C, de préférence dans la plage de 280 à 370 °C.
